# EUROPEAN PATENT SPECIFICATION

(11) **EP 2 541 865 B1**
(45) Date of publication and mention of the grant of the patent: **16.08.2017**
(21) Application number: 12162512.3
(22) Date of filing: 30.03.2012
(51) Int. Cl.: H04L 29/06

(54) **Method for sharing contents using temporary keys and electric device using the same.**
Verfahren zum gemeinsamen Nutzen von Inhalten unter Verwendung von vorübergehenden Schlüsseln und elektrische Vorrichtung damit
Procédé permettant de partager des contenus au moyen de clés temporaires et dispositif électrique l'utilisant

(30) Priority: 27.06.2011 KR 20110062510
(43) Date of publication of application: 02.01.2013
(73) Proprietor: Samsung Electronics Co., Ltd., Suwon-si, Gyeonggi-do, 443-742 (KR)
(72) Inventor: Jung, Jae-yoon, Seoul (KR); Cho, Jung-yon, Gyeonggi-do (KR); Hong, Jin-woo, Gyeonggi-do (KR); Park, Si-hong, Seoul (KR)
(74) Representative: Appleyard Lees IP LLP

(56) References cited:
- US-A1- 2008 178 252

## Description

### BACKGROUND

### 1. Field

Devices and methods consistent with the present exemplary embodiments relate to sharing content, and more particularly, to sharing content by establishing a network connection using a temporary key.

### 2. Description of the Related Art

Recently, as networking functions are added to many electronic devices, a home networking system is developing which includes many electronic device. That is, with a network system, a user is able to control other electronic devices using a single electronic device or transmit and/or receive content to and from the other electronic devices. However, a communication using such a home network system is possible only within a limited area, generally only inside of a home.

However, users want to access content stored in a device at home while they are outside where an Internet connection is available, and further want to share content with other electronic devices outside of the home.

Therefore, there is a need for methods that allow users to share content stored in electronic devices at home with other devices from outside more conveniently.

US 2008/0178252 discloses an arrangement for securely sharing data on a network by enabling a user to select and install a commonly-shared password in each terminal device that is on the network. The terminal devices are then able to form a

network that is temporarily secured using the user-installed password. A terminal-generated password is next created by one of the terminal devices and distributed over the temporarily secured network to the other devices. The terminal-generated password replaces the user-generated password so that the network is reformed and secured using the terminal-generated password.

### SUMMARY

The present invention is directed to subject-matter as disclosed by the appended claims.

### BRIEF DESCRIPTION OF THE DRAWINGS

The above and/or other aspects of the will be more apparent by describing certain exemplary embodiments with reference to the accompanying drawings, in which:
FIG. 1 is a view illustrating a content sharing system according to an exemplary embodiment;
FIG. 2 is a block diagram illustrating an electronic device according to an exemplary embodiment;
FIG. 3 is a view illustrating a GUI for registering a temporary key according to an exemplary embodiment;
FIG. 4 is a view illustrating a GUI for another electronic device to be authenticated by a server according to an exemplary embodiment;
FIG. 5 is a view of a GUI containing information that a network connection is established with the other electronic device according to an exemplary embodiment;
FIG. 6 is a view illustrating a list of other electronic devices with which a network connection has been established according to an exemplary embodiment;
FIG. 7 is a view illustrating a GUI for releasing a temporary key according to an exemplary embodiment;
FIG. 8 is a flowchart provided to explain a method for sharing content of an electronic device according to an exemplary embodiment;
FIG. 9 is a flowchart provided to explain a method for sharing content of a content sharing system according to an exemplary embodiment;

### DETAILED DESCRIPTION OF EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding. Also, well-known functions or constructions are not described in detail since they would obscure explanation with unnecessary detail. The terms "unit" and "block" as used herein mean a hardware component, such as a processor or circuit, and/or a software component that is executed by a hardware component such as a processor.

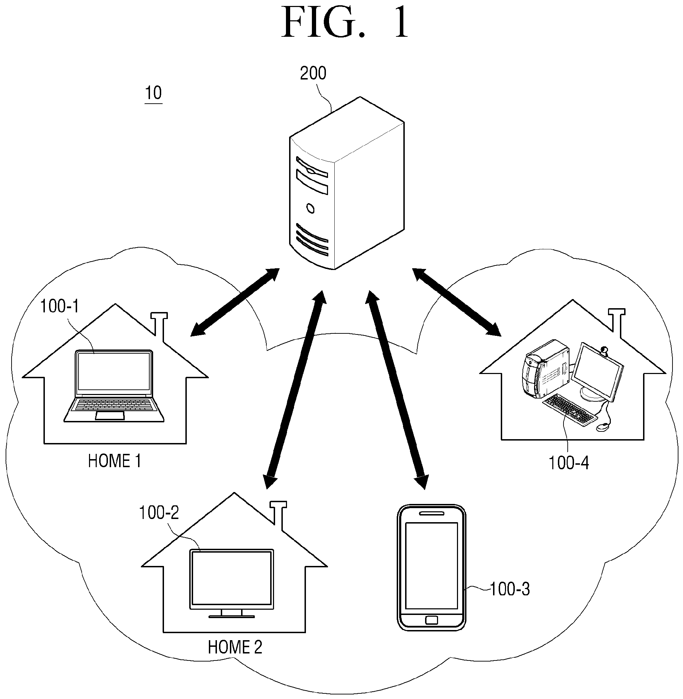

FIG. 1 is a view illustrating a content sharing system 10 according to an exemplary embodiment. As illustrated in FIG. 1, the content sharing system 10 includes a plurality of other electronic devices 100-1, 100-2, 100-3, 100-4 and a server 200.

One of the plurality of electronic devices 100-1 (hereinafter, referred to as 'electronic device') registers a temporary key with a server, other electronic devices 100-2, 100-3, 100-4 (hereinafter, referred to as 'other electronic devices'), excluding the electronic device 100-1, are authenticated by the server 200, using the temporary key registered with the server 200. When the other electronic devices 100-2, 100-3, 100-4 are authenticated by the server, the plurality of other electronic devices 100-1, 100-2, 100-3, 100-4 form a cloud network and transmit and/or receive content.

Herein, the temporary key is a One-Time Password (OTP), which is different from general identifications (IDs) or passwords, to authenticate temporarily the other electronic device 100-2 and thus, may be released and may be setup by a user to have an expiration date after which the OTP will no longer be valid.

In this case, the plurality of electronic devices 100-1,100-2,100-3,100-4 may be embodied as one of a notebook, a TV, a smart phone a computer, etc., which contain a communication function to access the server 200 as illustrated in FIG. 1. But this is only an example. The technical features of the present exemplary embodiments may be applied to any other electronic device which is able to access the server 200.

If the electronic device 100-1 requests registration of a temporary key, the server 200 receives the information of the temporary key and the electronic device 100-1 from the electronic device 100-1. And if the other electronic devices 100-2, 100-3, 100-4 respectively request authentication from the server 200 using the temporary key, the server 200 authenticates the other electronic devices 100-2, 100-3, 100-4 and transmits the information of the other electronic devices 100-2, 100-3, 100-4 requesting for forming a cloud network and the information of the other electronic devices 100-2, 100-3, 100-4 to the electronic device 100-1.

Accordingly, the electronic device 100-1 and the other electronic devices 100-2, 100-3, 100-4 form a cloud network, and transmit and/or receive content. In this case, the electronic device 100-1 may transmit content to the other electronic devices 100-2, 100-3, 100-4 via the server 200, or directly, i.e., without using the server 200.

In the case of sharing content using a temporary key, the scope of sharing content may be more limited compared to the case where general IDs and passwords are used, or where content is used directly from the electronic device 100-1. For instance, in a case where a general ID and password are used, or when content is used directly from electronic device 100-1, all of the content stored in a hard disk may be available. However, in a case of sharing content using a temporary key, only content which are stored in certain specified places on a hard disk may be available.

As described above, content may be shared more conveniently by forming a cloud network using a temporary key, and the security problem of leakage of user information in a user account may be addressed.

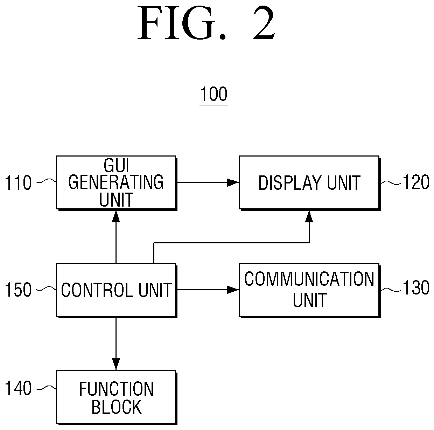

With reference to FIGS. 2 to 7, the electronic device 100 is explained in greater detail as follows. FIG. 2 is a block diagram of the electronic device 100 according to an exemplary embodiment. As illustrated in FIG. 2, the electronic device 100 comprises a GUI generating unit 110, a display unit 120, a communication unit 130, a function block 140 and a control unit 150.

The GUI generating unit 110 generates various GUIs for providing information or setting up an environment of an electronic device, and transmits it to the display unit 120.

Specifically, in a case where the electronic device 100 works as the electronic device 100-1 registering a temporary key, the GUI generating unit 110 may generate a GUI for setting a temporary key. Further, the GUI generating unit 100-1 may generate a GUI containing information that the other electronic devices 100-2, 100-3, 100-4 are authenticated by a server and access a cloud network. Also, the GUI generating unit 110 may generate a list of the other electronic devices 100-2, 100-3, 100-4 which are included in the cloud network, and a GUI for releasing the temporary key.

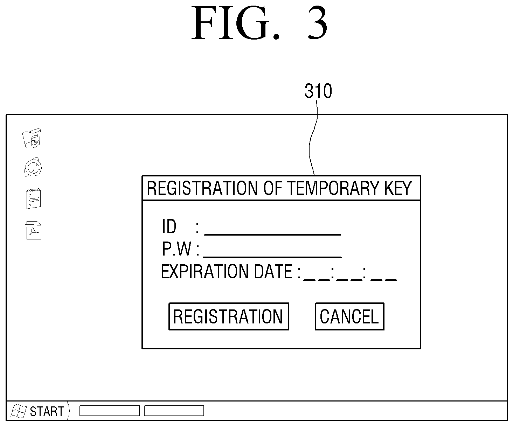

On the other hand, in a case where the electronic device 100 works as one of the other electronic devices 100-2, 100-3, 100-4, the GUI generating unit 110 may generate a GUI for authentication by the server and accessing the cloud network. Various GUIs described above will be explained in greater detail with reference to FIGS. 3 to 7.

The display unit 120 outputs images which are input from various sources and processed. In this case, the display unit 120 may display the GUI generated by the GUI generating unit 110 together.

The communication unit 130 performs a communication with the external server 200 or other electronic devices. In this case, the communication unit 130 could be embodied as communication modules such as a local area network (LAN) card, a modem, a Wi-Fi mode, a Bluetooth mode, etc.

The function block 140 performs the general functions of an electronic device, such as described in the following examples.
1) In a case where an electronic device is a computer or a notebook, the function block 140 operates various kinds of programs and applications.
2) In a case where an electronic device is a television, the function block 140 receives broadcasting content from an outside source and plays it.
3) In a case where an electronic device is a smart phone (mobile phone), the function block 140 performs a communication function communicating with an external device.
4) In a case where an electronic device is a Blue-ray Disk Player (BDP), the function block 140 plays content (especially, video content).
5) In a case where an electronic device is a game machine, the function block 140 saves and plays content (especially, game content).
6) In a case where an electronic device is a HTS (Home Theater System), the function block 140 plays and outputs content (especially, audio content).

The controlling unit 140 controls overall functions of the electronic device 100 by user's inputting. Specifically, the control unit 150 registers a temporary key with the external server 200, forms a cloud network with the other electronic devices 100-2, 100-3, 100-4 and shares content.

Specifically, the control unit 150 controls a GUI generating unit 110 to generate a temporary key registration GUI 310 in order to register a temporary key as illustrated in FIG. 3. In this case, the temporary key registration GUI 310 may be generated either if a user accesses server 200 and a predetermined menu in the server 200 is selected or if a predetermined button outside of the electronic device 100-1 is pressed. But this is only an exemplary embodiment, and the temporary key registration GUI 310 may be generated by other inputs by a user.

As illustrated in FIG. 3, the temporary key registration GUI 310 contains an item for setting the ID, password and expiration date of a temporary key. But this is only exemplary embodiments. The temporary key registration GUI 310 may contain items for setting only one or two items out of the ID, password and expiration date of temporary key, and may contain other setting information for setting a temporary key (for example, a user name).

If a temporary key is set via the temporary key registration GUI 310, the control unit 150 controls the communication unit 130 to transmit the information of the temporary key which is set via the temporary key registration GUI 310 and the information of the electronic device 100-1 to the server 200. In this case, the information of the electronic device 100-1 may include the network address, the type and the product name of electronic device 100-1 and etc.

As described above, if the information of a temporary key and the information of the electronic device 100-1 is transmitted from the electronic device 100-1 to the server 200, the server 200 authenticates the other electronic devices 100-2, 100-3, 100-4 using the information of the temporary key transmitted from the electronic device 100-1, and transmits the information of the electronic device 100-1 to the other electronic devices 100-2, 100-3, 100-4.

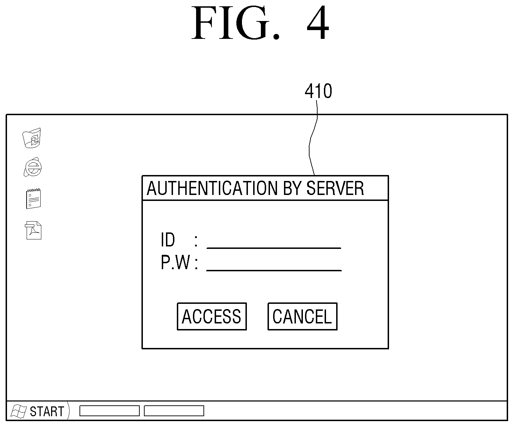

In the case that the electronic device 100 works like the other electronic device 100-2 to be authenticated by the server 200, the control unit 150 generates a server authentication GUI 410 for authentication by a server. Specifically, as illustrated in FIG. 4, the control unit 150 generates the server authentication GUI 410 for authentication, using the ID or password of the temporary key which is registered with the server 200. But this is only an exemplary embodiment, and in a case where only one of ID and password is set via the temporary key registration GUI 310, it may be allowed to input either one of corresponding ID or password to the server authentication GUI 410.

If the information of a temporary key is input to the server authentication GUI 410, the control unit 150 transmits the information of the temporary key which is input to the server authentication GUI 410 to the server 200. If the information of the temporary key, which is input to the server authentication GUI 410, and the information of the temporary key, which is registered with the server 200, match each other, the control unit 150 is authenticated by the server 200 and may control the communication unit 130 to receive the information of the electronic device 100-1 which registered the temporary key with the server 200. And the control unit 150 may control the communication unit 130 to transmit the information of the other electronic device 100-2 to server 200.

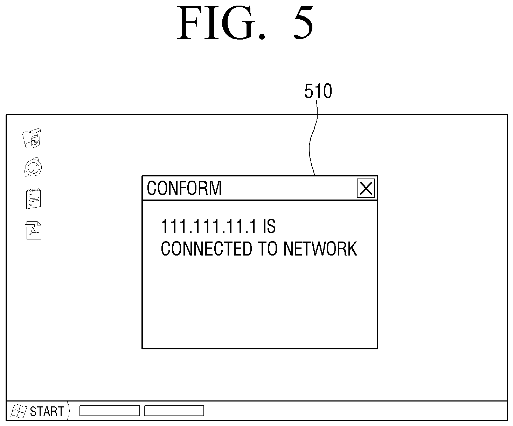

As explained in relation to FIG. 4, if the other electronic device 100-2 is authenticated by the server 200, the control unit 150 of the electronic device 100-1 controls the communication unit 130 to receive the information of the other electronic device 100-2 and generates a GUI 510 containing the information that the other electronic device 100-2 which is authenticated by the server 200 is accessed to a cloud network. In this case, the GUI 510 containing the information that the other electronic device 100-2 is accessed to network may contain information such as the IP address or ID of the other electronic device 100-2 as illustrated in FIG. 5.

In addition, if a certain command is input by a user, the control unit 150 may control the GUI generating unit 110 to generate an access list 610 containing the information of the other electronic device 100-2 which is connected to a cloud network.

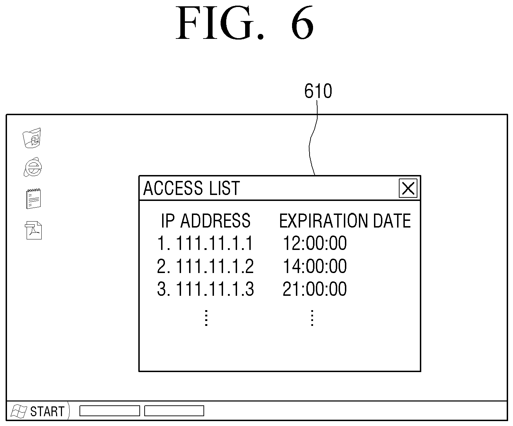

In this case, the access list 610 may include the information of IP address of other electronic device 100-2, the expiration date of a temporary key and etc as illustrated in FIG. 6. But this is only an exemplary embodiment, and the access list 610 may contain other information of the other electronic device 100-2.

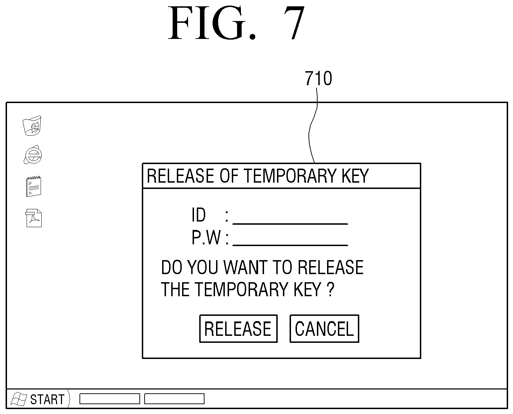

Also, the control unit 150 may release a temporary key by a user's command. Specifically, if the server 200 is accessed and a certain menu is selected, or a certain button outside of the electronic device 100-1 is pressed, the control unit 150 may generate a temporary key releasing GUI 710 as illustrated in FIG. 7.

In this case, the generated temporary key releasing GUI 710 may contain an item for inputting an ID and a password for releasing the temporary key which is set in FIG. 3. But this is only an exemplary embodiment, and the temporary key releasing GUI 710 may contain items for other purposes such as initialization.

If an ID and a password are input to the temporary key releasing GUI 710, the control unit 150 transmits the inputted temporary key to the server 200. And if the information of the temporary key which is input to the key releasing GUI 710 and the information of the registered temporary key match each other, the server 200 releases the network with other electronic device 100-2 using the registered temporary key.

However, releasing all of the network connections with other electronic devices 100-2 using the registered temporary key by releasing the registered temporary key is only one exemplary embodiment, and it is possible to selectively release the network access of any number of the electronic devices 100-2 from among the plurality of other electronic devices 100-2.

In addition, in a case where the expiration date of the temporary key which is set via temporary key registration GUI 310, such as illustrated in FIG. 3, has passed, the control unit 150 transmits such information to the server 200. If the information that expiration date has passed is transmitted to the server 200, the server 200 releases the network of the other electronic devices 100-2 which have expired.

As described above, the electronic device 100 forms a network using a temporary key and thus, a user may share content more conveniently and the security problem of leakage of user information in a user account may be solved.

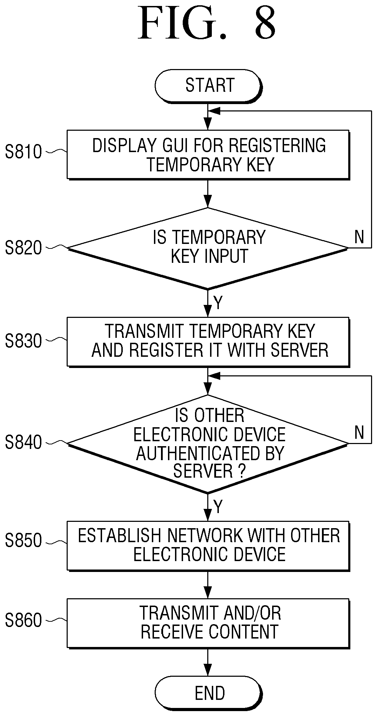

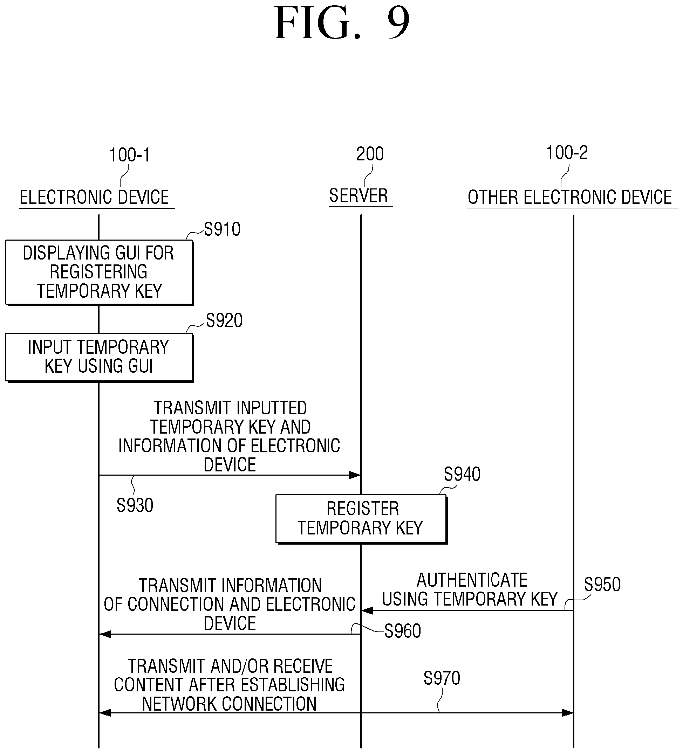

With reference to FIG. 8 and FIG. 9, the method for sharing content will be explained in greater detail as below.

FIG. 8 is a flowchart provided to explain a method for sharing content of the electronic device 100-1 according to an exemplary embodiment.

If a certain command is input by a user, the electronic device 100-1 displays a GUI for registering a temporary key (S810). In this case, if a user access the server 200, and if a certain menu in the server 200 is selected or a certain button outside of the electronic device 100-1 is pressed, the temporary key registration GUI 310 may be generated. The temporary key registration GUI 310 may contain an item for setting ID, password and expiration date of a temporary key as illustrated in FIG. 3.

If a temporary key is input by a user (S820-Y), the electronic device 100-1 transmits and registers the information of the temporary key to and with the server 200 (S830). Specifically, the electronic device 100-1 transmits the information of the temporary key which is set via the temporary key registration GUI 310 along with the information of the electronic device 100-1 to server 200.

If the temporary key is registered with the server 200, the electronic device 100-1 determines whether the other electronic device 100-2 is authenticated by the server 200 (S840). Specifically, if the information of the temporary key which is registered through operations S820 and S830 in the other electronic device 100-2 is input, the server 200 confirms the authentication of the other electronic device 100-2 and transmits the access information of the electronic device 100-1 and the information of the other electronic device 100-2. If the access information of the electronic device 100-1 and the information of the other electronic device 100-2 is transmitted, the electronic device 100-1 determines that the other electronic device 100-2 is authenticated by the server 200.

If the other electronic device 100-2 is authenticated by the server 200, the electronic device 100-1 forms a network with the other electronic device 100-2 (S850). If a network connection is established, the electronic device 100-1 transmits and/or receives content to and from the other electronic device 100-2 (S860).

As described above, the electronic device 100-1 forms a cloud network by registering a temporary key with the server and thus, a user may share content more conveniently with the other electronic device, and the security problem of leakage of user information in a user account may be solved by using a temporary key.

FIG. 9 is a flowchart provided to explain a method for sharing content of the content sharing system 10 according to an exemplary embodiment.

If a certain command is input by a user, the electronic device 100-1 displays a GUI for registering a temporary key (S910). A temporary key is input via the temporary key registration GUI 310 according to a user input (S920).

If a temporary key is input, the electronic device 100-1 transmits the information of the inputted temporary key and the information of the electronic device 100-1 to the external server 200 (S930). If the information of temporary key and the information of the electronic device 100-1 is transmitted to the external server 200, the server 200 registers the key inputted with the temporary key registration GUI 310 as an One-Time Password (S940).

After the temporary key is registered, the other electronic device 100-2 is authenticated by the server using the temporary key (S950). Specifically, if the temporary key is input to the server access GUI 410 of the other electronic device 100-2 as illustrated in FIG. 4, the other electronic device 100-2 transmits the information of the temporary key to the server 200. If the information of the temporary key which is input to the server access GUI 410 is transmitted to the server 200, the server 200 determines whether the information of the temporary key transmitted from the other electronic device 100-2 and the registered information of the key match each other. If the information of the temporary key transmitted from the other electronic device 100-2 and the registered information of the temporary key match each other, the server 200 authenticates the other electronic device 100-1 as the electronic device 100 which will access a network.

If the other electronic device 100-2 is authenticated by the server 200, the server 200 transmits the access information of the other electronic device 100-2 and the information of the other electronic device 100-2 to electronic device 100-1 (S960). In this case, the information of other electronic device 100-2 may include information such as the network address and ID of the other electronic device 100-2.

If the access information of the other electronic device 100-2 is transmitted to the electronic device 100-1, the electronic device 100-1 forms a network with the other electronic device 100-2 and transmits and/or receives content (S970) .

By the content sharing system 10 described above, a user may use content stored in electronic devices at home using an electronic device outside of the home and the security problem may be solved by using a temporary key.

Further, another exemplary embodiment may include a computer-readable recording medium including a program for running the dual view display method as described above. The computer-readable recording medium may include various types of recording apparatuses in which data being readable by a computer system is stored. Examples of the computer-readable recording medium may include a ROM, a RAM, a CD-ROM, a magnetic tape, a floppy disk, an optical data storing apparatus, etc. Further, computer-readable recording media may be distributed in computer systems connected through a network, so that they can store and execute codes readable by the computer in a distributed method.

The foregoing embodiments are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for sharing content of an electronic device (100-1), the method comprising:
displaying (S810) on the electronic device (100-1) a graphical user interface (GUI) (310) for registering a temporary key for authentication;
if a temporary key is inputted (S820Y) via the GUI (310), transmitting (S830) the inputted temporary key to a server (200);
establishing (S850) a network with at least one other electronic device (100-2) via the server (200), and
transmitting and/or receiving (S860) content to/from the at least one other electronic device (100-2) with which the network is established, wherein the inputted temporary key transmitted from the electronic device (100-1) to the server (200) is registered by the server, and
the at least one other electronic device (100-2) is authenticated by the server (200) by the at least one other device transmitting a key matching the registered temporary to the server before the establishing of the network.

2. The method as claimed in claim 1, wherein the GUI (310) contains an item for setting at least one of an identification (ID), a password and a expiration date of the temporary key.

3. The method as claimed in claim 1 or claim 2, wherein the registering comprises transmitting the information of the electronic device (100-1) along with the temporary key to the server (200) and registering the information with the server (200).

4. The method as claimed in one of claim 1 to claim 3, wherein the establishing further comprises:
generating a GUI (510, 610) containing information that the network is established with the other electronic device (100-2).

5. The method as claimed in one of claim 1 to claim 4, further comprising:
generating and displaying a list (610) including the other electronic device (100) with which the network is established.

6. The method as claimed in one of claim 1 to claim 5, further comprising:
if a command is inputted by a user, generating a GUI (710) for releasing the temporary key; and
releasing the temporary key, using a GUI for releasing the temporary key.

7. The method as claimed in claim 6, wherein the releasing comprises releasing the temporary key by inputting the registered temporary key to a GUI (710) for releasing the temporary key.

8. The method as claimed in one of claim 1 to claim 7, wherein the transmitting and/or receiving comprises transmitting and/or receiving content to/from the other electronic device (100-2) either via the server (200) or directly.

9. The method as claimed in one of claim 1 to claim 8, wherein the temporary key includes at least one of a disposable identification (ID) and a disposable password.

10. The method as claimed in one of claim 1 to claim 9, wherein the displaying comprises displaying the GUI if a button outside of the electronic device (100-1) is pressed.

11. A system including an electronic device (100-1), at least one other electronic device (100-2) and a server (200), the system configured to execute a method according to any of the preceding claims.

12. An electronic device (100-1) configured to operate in a system according to claim 11.

13. A server (200) configured to operate in a system according to claim 11.

## Patentansprüche

1. Verfahren zum gemeinsamen Nutzen von Inhalten einer elektronischen Vorrichtung (100-1), das Verfahren umfassend:
Anzeigen (S810) auf der elektronischen Vorrichtung (100-1) einer grafischen Benutzeroberfläche (Graphical User Interface, GUI) (310) zum Registrieren eines vorübergehenden Schlüssels für die Authentifizierung;
wenn ein vorübergehender Schlüssel über die GUI (310) eingegeben wird (S820Y), Übertragen (S830) des eingegebenen vorübergehenden Schlüssels an einen Server (200) ;
Einrichten (S850) eines Netzwerks mit mindestens einer anderen elektronischen Vorrichtung (100-2) über den Server (200), und
Übertragen und/oder Empfangen (S860) von Inhalten an/von der mindestens einen anderen elektronischen Vorrichtung (100-2), mit der das Netzwerk eingerichtet wird,
wobei der eingegebene vorübergehende Schlüssel, der von der elektronischen Vorrichtung (100-1) an den Server (200) übertragen wird, von dem Server registriert wird, und
die mindestens eine andere elektronische Vorrichtung (100-2) durch den Server (200) durch die mindestens eine andere Vorrichtung authentifiziert wird, die einen Schlüssel vor dem Einrichten des Netzwerks überträgt, der mit dem registrierten vorübergehenden Schlüssel übereinstimmt.

2. Verfahren nach Anspruch 1, wobei die GUI (310) ein Element zum Einstellen von mindestens einem von einer Kennung (ID), einem Passwort und einem Ablaufdatum des vorübergehenden Schlüssels enthält.

3. Verfahren nach Anspruch 1 oder 2, wobei das Registrieren das Übertragen der Information der elektronischen Vorrichtung (100-1) zusammen mit dem vorübergehenden Schlüssel an den Server (200) und das Registrieren der Information bei dem Server (200) umfasst.

4. Verfahren nach einem der Ansprüche 1 bis 3, wobei das Einrichten ferner umfasst:
Erzeugen einer GUI (510, 610), die Informationen enthält, dass das Netzwerk mit der anderen elektronischen Vorrichtung (100-2) eingerichtet wird.

5. Verfahren nach einem der Ansprüche 1 bis 4, ferner umfassend:
Erzeugen und Anzeigen einer Liste (610), einschließlich der anderen elektronischen Vorrichtung (100), mit der das Netzwerk eingerichtet ist.

6. Verfahren nach einem der Ansprüche 1 bis 5, ferner umfassend:
wenn ein Befehl von einem Benutzer eingegeben wird, Erzeugen einer GUI (710) zum Freigeben des vorübergehenden Schlüssels; und
Freigeben des vorübergehenden Schlüssels unter Verwendung einer GUI für die Freigabe des vorübergehenden Schlüssels.

7. Verfahren nach Anspruch 6, wobei das Freigeben das Freigeben des vorübergehenden Schlüssels durch Eingeben des registrierten vorübergehenden Schlüssels in eine GUI (710) zum Freigeben des vorübergehenden Schlüssels umfasst.

8. Verfahren nach einem der Ansprüche 1 bis 7, wobei das Übertragen und/oder Empfangen das Übertragen und/oder Empfangen von Inhalten an/von der anderen elektronischen Vorrichtung (100-2) entweder über den Server (200) oder direkt umfasst.

9. Verfahren nach einem der Ansprüche 1 bis 8, wobei der vorübergehende Schlüssel mindestens eines von einer Einwegkennung (ID) und einem Einwegkennwort enthält.

10. Verfahren nach einem der Ansprüche 1 bis 9, wobei das Anzeigen das Anzeigen der GUI umfasst, wenn eine Taste außerhalb der elektronischen Vorrichtung (100-1) gedrückt wird.

11. System mit einer elektronischen Vorrichtung (100-1), mindestens einer anderen elektronischen Vorrichtung (100-2) und einem Server (200), wobei das System konfiguriert ist, um ein Verfahren nach einem der vorhergehenden Ansprüche auszuführen.

12. Elektronische Vorrichtung (100-1), die konfiguriert ist, um ein System nach Anspruch 11 zu betreiben.

13. Server (200), der konfiguriert ist, um ein System nach Anspruch 11 zu betreiben.

## Revendications

1. Procédé pour partager le contenu d'un dispositif électronique (100-1), ce procédé comprenant :
l'affichage (S810) sur le dispositif électronique (100-1) d'une interface utilisateur graphique (GUI) (310) pour enregistrer une clé temporaire pour l'authentification ;
si une clé temporaire est saisie (S820Y) via la GUI (310), la transmission (S830) de la clé temporaire saisie à un serveur (200) ;
l'établissement (S850) d'un réseau avec au moins un autre dispositif électronique (100-2) via le serveur (200), et
la transmission et/ou la réception (S860) du contenu à/depuis l'au moins un autre dispositif électronique (100-2) avec lequel le réseau est établi,
dans lequel la clé temporaire saisie transmise du dispositif électronique (100-1) au serveur (200) est enregistrée par le serveur, et
l'au moins un autre dispositif électronique (100-2) est authentifié par le serveur (200) par l'au moins un autre dispositif transmettant au serveur, avant l'établissement du réseau, une clé correspondant à la clé temporaire enregistrée.

2. Procédé selon la revendication 1, dans lequel la GUI (310) contient une option pour définir au moins soit une identification (ID), soit un mot de passe, soit une date d'expiration de la clé temporaire.

3. Procédé selon la revendication 1 ou la revendication 2, dans lequel l'enregistrement comprend la transmission des informations du dispositif électronique (100-1) avec la clé temporaire au serveur (200) et l'enregistrement de ces informations avec le serveur (200).

4. Procédé selon une des revendications 1 à 3, dans lequel l'établissement comprend en outre :
la génération d'une GUI (510, 610) contenant l'information que le réseau est établi avec l'autre dispositif électronique (100-2).

5. Procédé selon une des revendications 1 à 4, comprenant en outre :
la génération et l'affichage d'une liste (610) comprenant l'autre dispositif électronique (100) avec lequel le réseau est établi.

6. Procédé selon une des revendications 1 à 5, comprenant en outre :
si une commande est saisie par un utilisateur, la génération d'une GUI (710) pour libérer la clé temporaire ; et
la libération de la clé temporaire, en utilisant une GUI pour libérer la clé temporaire.

7. Procédé selon la revendication 6, dans lequel cette libération comprend la libération de la clé temporaire en saisissant la clé temporaire enregistrée sur une GUI (710) pour libérer la clé temporaire.

8. Procédé selon une des revendications 1 à 7, dans lequel la transmission et/ou la réception comprend la transmission et/ou la réception du contenu à/depuis l'autre dispositif électronique (100-2) soit via le serveur (200), soit directement.

9. Procédé selon une des revendications 1 à 8, dans lequel la clé temporaire comprend au moins soit une identification (ID) jetable, soit un mot de passe jetable.

10. Procédé selon une des revendications 1 à 9, dans lequel l'affichage comprend l'affichage de la GUI si on appuie sur un bouton à l'extérieur du dispositif électronique (100-1).

11. Système comprenant un dispositif électronique (100-1), au moins un autre dispositif électronique (100-2) et un serveur (200), ce système étant configuré de façon à exécuter un procédé selon l'une quelconque des revendications précédentes.

12. Dispositif électronique (100-1) configuré de façon à fonctionner dans un système selon la revendication 11.

13. Serveur (200) configuré de façon à fonctionner dans un système selon la revendication 11.
